# EUROPÄISCHE PATENTSCHRIFT

(11) **EP 3 297 089 B1**
(45) Veröffentlichungstag und Bekanntmachung des Hinweises auf die Patenterteilung: **24.03.2021**
(21) Anmeldenummer: 17188993.4
(22) Anmeldetag: 01.09.2017
(51) Int. Cl.: H01M 10/625, B66F 9/075, H01M 10/6563, H01M 10/613, H01M 2/10

(54) **FLURFÖRDERZEUG MIT EINER TRAKTIONSBATTERIE**
INDUSTRIAL TRUCK WITH A TRACTION BATTERY
CHARIOT ÉLÉVATEUR AVEC UNE BATTERIE DE TRACTION

(30) Priorität: 14.09.2016 DE 102016117266
(43) Veröffentlichungstag der Anmeldung: 21.03.2018
(73) Patentinhaber: STILL GmbH, 22113 Hamburg (DE)
(72) Erfinder: Wede, Marc, 22941 Bargteheide (DE); Mittmann, Heribert, 22145 Hamburg (DE); Kalweit, Andreas, 21395 Tespe (DE)
(74) Vertreter: Patentship Patentanwaltsgesellschaft mbH

(56) Entgegenhaltungen:
- DE-A1-102014 106 647
- JP-A- 2001 167 803
- JP-A- 2003 007 257
- US-A- 3 745 048
- US-A1- 2001 030 069
- US-A1- 2006 172 187
- US-A1- 2010 294 580
- US-A1- 2015 115 890

## Beschreibung

Die Erfindung betrifft ein Flurförderzeug mit einer Traktionsbatterie, wobei die Traktionsbatterie mehrere in einem Batterietrog angeordnete Batteriezellen aufweist und in einem Batteriefach des Flurförderzeugs angeordnet ist, wobei zwischen den Batteriezellen mindestens ein Kühlkanal in dem Batterietrog angeordnet ist und das Flurförderzeug mit einem Lüfter versehen ist, mit dem ein den Kühlkanal durchströmender Luftstrom erzeugbar ist, wobei an dem Kühlkanal ein Luftstromeinlass, der mit dem Auslass des Lüfters verbindbar ist, und ein Luftstromauslass ausgebildet ist, wobei der Kühlkanal mit einer Luftstromführungseinrichtung versehen ist, die den vom Lüfter erzeugten Luftstrom in dem Kühlkanal von dem Luftstromeinlass zu dem Luftstromauslass leitet.

Für den Betrieb von batterie-elektrisch angetriebenen Flurförderzeugen, beispielsweise Gegengewichtsgabelstaplern, kommen Traktionsbatterien zum Einsatz, die im Regelfall als austauschbare Batterien in ein Batteriefach des Flurförderzeugs eingesetzt und, sobald sie entladen sind, gegen eine aufgeladene Traktionsbatterie ersetzt werden können. Im Regelfall sind diese Traktionsbatterien als Bleibatterien, beispielsweise als Blei-Säure-Batterie oder als Blei-Gel-Batterien ausgebildet.

Derartige Traktionsbatterien sind so aufgebaut, dass mehrfach in Reihe verschaltete, standardisierte Batteriezellen in einem Batterietrog angeordnet sind. Durch die Reihenschaltung wird eine geforderte Spannung erreicht. Der Batterietrog schützt die in diesem eingebauten Batteriezellen vor Beschädigungen. Dabei sind die verschiedenen möglichen Batterietröge sowie deren Nenngewichte ebenfalls standardisiert. Das Gesamtgewicht der Traktionsbatterie ist bei batterie-elektrisch betriebenen Gegengewichtsgabelstaplern üblicherweise als Teil eines wirksamen Gegengewichts zu einer Last in den Stabilitätsberechnungen berücksichtigt. Aus diesem Grund ist es nicht möglich, kleinere bzw. leichtere Traktionsbatterien zu verwenden. Darüber hinaus werden Traktionsbatterien so ausgelegt, dass möglichst große Zellen in den Batterietrog eingesetzt werden, um durch maximale Ausnutzung des Raumes eine möglichst hohe Energiedichte und Kapazität der Traktionsbatterie zu erreichen.

Blei-Säure-Batterien als Traktionsbatterien sind sehr robust und seit Jahrzehnten im Einsatz bei Flurförderzeugen bewährt. Nachteilig an Blei-Säure-Batterien als Traktionsbatterien ist jedoch, dass Blei-Säure-Batterien im Vergleich zu beispielsweise Lithium-Ionen-Batterien einen relativ hohen Innenwiderstand aufweisen. Der hohe Innenwiderstand führt sowohl beim Entladen wie auch bei einem Aufladen zu einem hohen Wärmeeintrag in die Traktionsbatterie.

Mit zunehmender Größe der Traktionsbatterie und somit zunehmender Nennkapazität einer Blei-Säure-Traktionsbatterie ergibt sich ein größer werdendes und somit ungünstigeres Verhältnis des Volumens der Traktionsbatterie zur Oberfläche des Batterietrogs.

Bei Blei-Säure-Traktionsbatterien mit großer Nennkapazität und einem entsprechend ungünstigen Verhältnis der Oberfläche zu dem dann zwangsläufig großen Volumen ergeben sich erhebliche Wärmekonzentrationen in der Traktionsbatterie durch Wärmespeicherung im Betrieb des Flurförderzeugs. In der Praxis weisen derartige Traktionsbatterien mit großer Nennkapazität dann auch ein sehr ungünstiges Abkühlverhalten auf aufgrund des bereits genannten ungünstigen Verhältnisses von Oberfläche zu Volumen.

Bei Blei-Säure-Traktionsbatterien mit großer Kapazität, beispielsweise bei Traktionsbatterien im Bereich von Gewichten oberhalb von 1t, ist es dann oftmals nicht mehr möglich, die Traktionsbatterie wie üblich acht oder mehr Stunden pro Tag durchgehend einzusetzen, sondern es müssen längere Auskühlphasen vorgesehen werden, damit nicht unzulässig hohe Temperaturen der Batteriezellen erreicht werden. Beispielsweise hat sich gezeigt, dass eine 80 V Batterie mit einer Kapazität von 1240 Ah im Einsatz im Flurförderzeug innerhalb eines Lade-Entladezyklus Abkühlpausen bis zum nächsten solchen Zyklus von einem bis hin zu vier Tagen benötigt. Dadurch entstehen erhebliche Kosten und müssen insgesamt für den Betrieb eines Flurförderzeugs mehr Traktionsbatterien zum Wechseln vorgehalten werden.

Aus der JP 2003 007257 A ist ein gattungsgemäßes Flurförderzeug mit einer Traktionsbatterie bekannt, wobei die Traktionsbatterie mehrere in einem Batterietrog angeordnete Batteriezellen aufweist und in einem Batteriefach des Flurförderzeugs angeordnet ist. Die Batteriezellen sind an den Außenwänden mit Abstandshaltern versehen, so dass zwischen den Batteriezellen im Batterietrog Kühlkanäle ausgebildet sind. Ein Luftstrom eines Lüfters, der im Gegengewicht des Flurförderzeugs verbaut ist, durchströmt die Kühlkanäle.

Die US 2006/172187 A1 offenbart ein Flurförderzeug mit einer Traktionsbatterie, wobei die Traktionsbatterie mehrere in einem Batterietrog angeordnete Batteriezellen aufweist. Gemäß der Figur 5 sind die Wände des Batterietrogs mit vertikal ausgerichteten Einbuchtungen versehen und sind zwischen den Batteriezellen Abstandsbleche angeordnet, so dass vertikal angeordnete Kühlkanäle zwischen den Batteriezellen entstehen. Die Batteriezellen stehen auf einem Lochboden. Ein Lüfter erzeugt einen vertikal verlaufenden Luftstrom, der die Batteriezellen kühlt.

Die DE10 2014 106 647 A1 offenbart ein Flurförderzeug mit einer in einem Batterietrog angeordneten Traktionsbatterie, wobei ein Luftstromeinlass und ein Luftstromauslass an einer Abdeckung des Batterietrogs angeordnet sind.

Der vorliegenden Erfindung liegt die Aufgabe zugrunde, ein Flurförderzeug mit einer Traktionsbatterie der eingangs genannten Gattung zur Verfügung zu stellen, bei dem mit geringem Bauaufwand lange Auskühlphasen der Traktionsbatterie verhindert werden und die Einsatzzeit der Traktionsbatterie erhöht werden kann.

Diese Aufgabe wird erfindungsgemäß dadurch gelöst, dass der Kühlkanal an der Oberseite der Batteriezellen von einer Abdeckung abgedeckt ist, an der der Luftstromeinlass und der Luftstromauslass ausgebildet sind, und dass die Luftstromführungseinrichtung einen mäanderförmigen Luftstrom innerhalb des Kühlkanals von dem Luftstromeinlass zu dem Luftstromauslass erzeugt. Erfindungsgemäß ist somit das Flurförderzeug mit einem Lüfter versehen, der einen Luftstrom erzeugt, der in einen Kühlkanal geleitet wird, der zwischen den Batteriezellen in dem Batterietrog angeordnet ist, so dass der von dem fahrzeugseitigen Lüfter erzeugte Luftstrom den Bauraum zwischen den Batteriezellen im Batterietrog belüftet und somit kühlt. Mit den Kühlkanälen in dem Batterietrog und einer Luftkühlung, bei der von einem im Flurförderzeug angeordneten Lüfter ein den Kühlkanal durchströmender Luftstrom erzeugbar ist, kann somit mit geringem Bauaufwand bei großen als Blei-Säure-Batterien ausgebildeten Traktionsbatterie eine Luftkühlung erzielt werden, so dass lange Abkühlzeiten vermieden werden und die Einsatzzeit der Traktionsbatterie im Flurförderzeug erhöht werden kann. Der von dem fahrzeugseitigen Lüfter erzeugte Luftstrom strömt hierbei in dem Kühlkanal der Traktionsbatterie von dem Luftstromeinlass zu dem Luftstromauslass. Der fahrzeugseitige Lüfter ermöglicht es hierbei in vorteilhafter Weise, kühle Luft anzusaugen, beispielsweise aus einem Aggregateraum des Flurförderzeugs oder aus der Umgebung des Flurförderzeugs, die in die Kühlkanäle der Traktionsbatterie zu deren Kühlung eingeleitet wird, so dass die Traktionsbatterie wirksam gekühlt werden kann. Durch die Kühlkanäle und die Luftkühlung in den Kühlkanälen kann somit bereits beim Entladen der Traktionsbatterie wie auch beim Aufladen der Traktionsbatterie sowie in Pausenzeiten die anfallende Abwärme erheblich besser aus dem Inneren der Traktionsbatterie abgeführt werden. Dies gilt insbesondere für die Batteriezellen, die innerhalb des Batterietrogs in der Mitte bzw. in einem zentralen Bereich angeordnet sind. Im Gegensatz zu Batteriezellen am Rand des Batterietrogs können diese nur wenig Wärme über Konvektion an die Wände des Batterietrogs abgeben und weisen daher eine höhere Temperatur auf. Der Kühlkanal ist erfindungsgemäß mit einer Luftstromführungseinrichtung versehen, die den vom Lüfter erzeugten Luftstrom in dem Kühlkanal von dem Luftstromeinlass zu dem Luftstromauslass leitet und einen mäanderförmigen Luftstrom innerhalb des Kühlkanals von dem Luftstromeinlass zu dem Luftstromauslass erzeugt. Eine Luftstromführungseinrichtung in dem Kühlkanal ermöglicht es, den von dem fahrzeugseitigen Lüfter erzeugten Luftstrom in einer gewünschten Weise in dem Kühlkanal von dem Luftstromeinlass zum Luftstromauslass zu führen. Bevorzugt wird der von dem Lüfter erzeugte Luftstrom durch die Luftstromführungseinrichtung im Inneren des Kühlkanals derart geführt und geleitet, dass der Luftstrom von Außenseiten der Batteriezellen möglichst viel Wärme über die Luft abführt.

Bei der Erfindung sind der Luftstromeinlass und der Luftstromauslass an einer den Kühlkanal abdeckenden Abdeckung ausgebildet. Der von dem fahrzeugseitigen Lüfter erzeugte Luftstrom kann somit effektiv in dem Kühlkanal vom Luftstromeinlass zum Luftstromauslass geführt werden, so dass eine effektive Abfuhr von Wärme aus der Traktionsbatterie erzielt wird.

Ein einfacher Bauaufwand für die Luftkühlung der Traktionsbatterie ist erzielbar, wenn gemäß einer vorteilhaften Ausgestaltungsform der Erfindung der Luftstromeinlass und der Luftstromauslass an der Traktionsbatterie von Kühlschläuchen gebildet sind.

Vorteilhafterweise ist gemäß einer Ausgestaltungsform der Erfindung der Auslass des Lüfters von einem Kühlschlauch gebildet. Dies ermöglicht es auf einfache Weise, den Auslass des fahrzeugseitigen Lüfters mit dem Luftstromeinlass an der Traktionsbatterie zu verbinden und zu trennen, wenn die Traktionsbatterie im Falle eines Wechsels der Traktionsbatterie aus dem Batteriefach des Flurförderzeugs ausgebaut bzw. eingebaut wird.

Vorteilhafterweise ist der Luftstromauslass des Kühlkanals mit einem Auslass am Flurförderzeug verbindbar. Dies ermöglicht es auf einfache Weise, die erwärmte Luft aus dem Kühlkanal über einen Auslass an dem Flurförderzeug aus dem Batteriefach und somit aus dem Flurförderzeug herauszuführen.

Der Lüfter kann im Betrieb des Flurförderzeugs dauernd betrieben sein.

Gemäß einer vorteilhaften Weiterbildung der Erfindung ist der Lüfter temperaturabhängig durch einen im Flurförderzeug angeordneten Temperatursensor gesteuert. Dadurch kann der Energieverbrauch des Lüfters minimiert werden und dieser nur eingeschaltet werden, wenn dies zur Kühlung der Traktionsbatterie erforderlich ist.

Es ist weiterhin auch möglich eine temperaturabhängige und bedarfsgerechte Regelung dahingehend durchzuführen, dass die Drehzahl und Luftfördermenge des Lüfters geregelt wird, beispielsweise durch eine Pulsweitenmodulation mit entsprechender Steuerung des Lüfters.

Gemäß einer vorteilhaften Weiterbildung der Erfindung wird der Lüfter in Abhängigkeit von der Leistung des Flurförderzeugs eingeschaltet und ausgeschaltet. Dies ermöglicht es auf einfache Weise, den Lüfter bedarfsgerecht ein- und auszuschalten, beispielsweise bei höherer Leistung des Fahrzeugs einzuschalten und bei niedrigerer Leistung des Fahrzeugs auszuschalten.

Bevorzugt ist der Lüfter Bestandteil der elektrischen Anlage des Flurförderzeugs und ist von einer elektronischen Fahrzeugsteuerung des Flurförderzeugs angesteuert. Hierdurch wird der Bauaufwand für die Traktionsbatterie verringert, da an der Traktionsbatterie für die Luftkühlung kein Lüfter erforderlich ist.

Gemäß einer vorteilhaften Weiterbildung der Erfindung ist die Traktionsbatterie mit einem Zusatzlüfter versehen, mit dem ein den Kühlkanal durchströmender Luftstrom erzeugbar ist. Ein derartiger an bzw. in der Traktionsbatterie angeordneter Zusatzlüfter ermöglicht eine besondere effektive Kühlung der Traktionsbatterie, da dem Zusatzlüfter an der Traktionsbatterie die kühle Luft des fahrzeugseitigen Lüfters zugeführt wird und somit der Zusatzlüfter an der Traktionsbatterie die von dem fahrzeugseitigen Lüfter gelieferte kühle Luft in dem Kühlkanal der Traktionsbatterie von dem Luftstromeinlass zu dem Luftstromauslass führt und umwälzt.

Vorteile ergeben sich, wenn gemäß einer bevorzugten Ausgestaltungsform der Erfindung der Zusatzlüfter in dem Kühlkanal angeordnet ist. Dies ermöglicht eine besonders effektive Umwälzung und Förderung des Luftstroms von dem Zusatzlüfter in dem Kühlkanal von dem von dem Luftstromeinlass zu dem Luftstromauslass.

Die Traktionsbatterie ist vorteilhafterweise als Blei-Säure-Batterie oder als Blei-Gel-Batterie ausgebildet.

Weitere Vorteile und Einzelheiten der Erfindung werden anhand des in den schematischen Figuren dargestellten Ausführungsbeispiels näher erläutert. Hierbei zeigt
- Figur 1: eine Traktionsbatterie eines erfindungsgemäßen Flurförderzeugs in einer Draufsicht und
- Figur 2: die Traktionsbatterie mit der erfindungsgemäßen Luftkühlung in einer perspektivischen Darstellung.

Die Traktionsbatterie 1 weist einen Batterietrog 2 auf, in dem mehrere Batteriezellen 3 eingebaut sind. Die Traktionsbatterie 1 ist als Blei-Säure-Batterie oder als Blei-Gel-Batterie ausgebildet.

Die Batteriezellen 3 sind derart dimensioniert, dass zwischen den Batteriezellen 3 ein Bauraum verbleibt, der zumindest einen Kühlkanal 5 in dem Batterietrog 2 bildet. Im dargestellten Ausführungsbeispiel sind drei parallel angeordnete Kühlkanäle 5a, 5b, 5c vorgesehen.

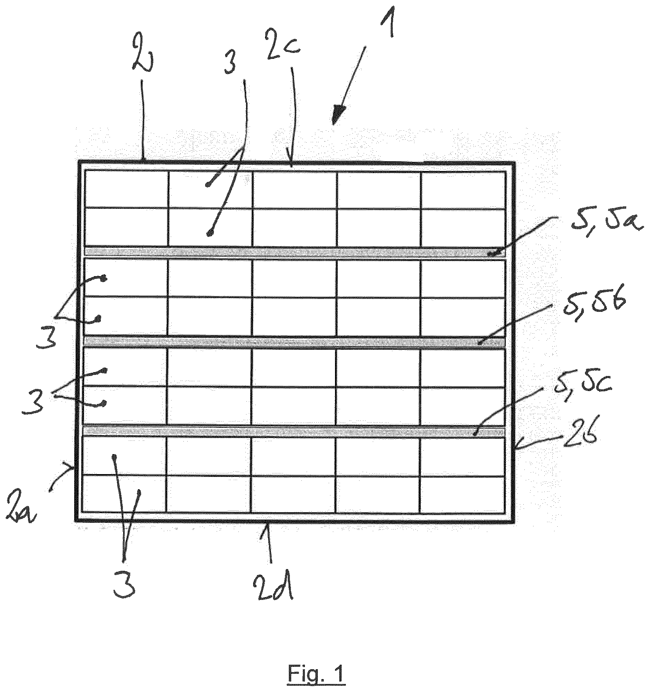

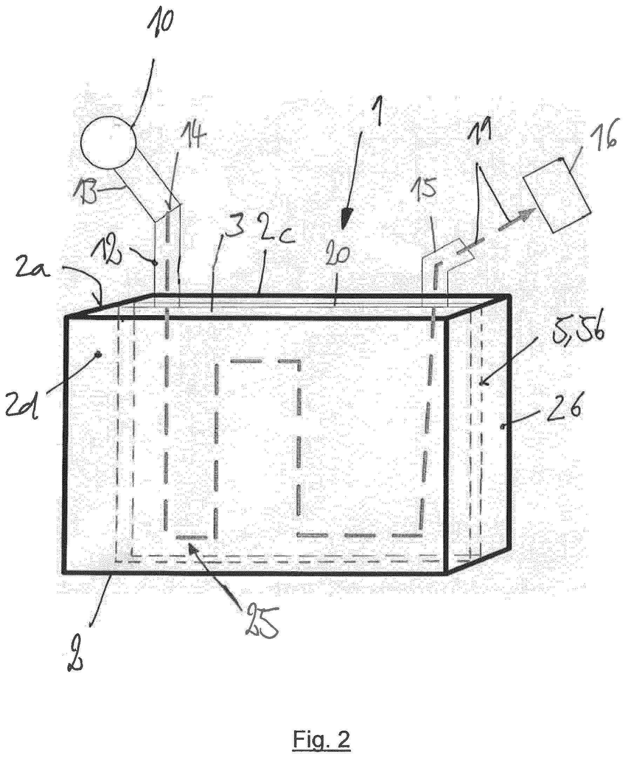

Die Kühlkanäle 5a-5c verlaufen jeweils von einer in den Figuren 1, 2 linken Wand 2a bis zu einer gegenüberliegenden rechten Wand 2b des Batterietrogs 2.

Zwischen der Wand 2c des Batterietrogs 2 und dem Kühlkanal 5a sind zwei Reihen Batteriezellen 3 angeordnet. Zwischen den Kühlkanälen 5a, 5b sind ebenfalls zwei Reihen Batteriezellen 3 angeordnet. Zwischen dem Kühlkanal 5b und der Wand 2d des Batterietrogs 2 sind ebenfalls zwei Reihen Batteriezellen 3 angeordnet. Der Kühlkanal 5b ist bevorzugt mittig zwischen den Wänden 2c, 2d im Batterietrog 2 angeordnet.

Die Kühlkanäle 5a-5c erstecken sich bevorzugt von der Oberseite der Batteriezellen 3 bis zu einem Boden des Batterietrogs 2. Die Kühlkanäle 5a-5c bildet somit einen rechteckigen Hohlraum zwischen den Batteriezellen 3, der sich über die volle Länge und Tiefe des Batterietrogs 2erstreckt.

Das nicht mehr dargestellte Flurförderzeug weist ein Batteriefach auf, in das die Traktionsbatterie 1 eingesetzt ist.

Das Flurförderzeug ist - wie in der Figur 2 dargestellt ist - mit einem im Flurförderzug montierten Lüfter 10 versehen. Mit dem Lüfter 10 wird ein den Bauraum zwischen den Batteriezellen 3 und somit den Kühlkanal 5 durchströmender Luftstrom 11 erzeugt. Der Lüfter 10 belüftet somit den Bauraum zwischen den Batteriezellen 3 und somit den Kühlkanal 5. Der fahrzeugseitige Lüfter 10 ist bevorzugt derart ausgeführt und angeordnet, dass er kühle Luft ansaugt, beispielsweise aus einem Aggregateraum des Flurförderzeugs oder aus der Umgebung außerhalb des Flurförderzeugs, und die kühle Luft in den Kühlkanal 5 der Traktionsbatterie 1 zu deren Kühlung einleitet.

Der Kühlkanal 5 der Traktionsbatterie 1 ist mit einem Luftstromeinlass 12 versehen. Der Lüfter 10 weist einen Auslass 13 auf, der an einer Verbindungsstelle bzw. Trennstelle 14 mit dem Luftstromeinlass 12 der Traktionsbatterie 1 verbindbar ist. Der Kühlkanal 5 der Traktionsbatterie 1 ist weiterhin mit einem Luftstromauslass 15 versehen. Der Luftstromauslass 15 an der Traktionsbatterie 5 ist mit einem Auslass 16 des Flurförderzeugs verbunden, an dem die erwärmte Luft aus dem Batteriefach des Flurförderzeugs 1 herausströmen kann. In der Figur 2 ist die Luftkühlung an dem mittleren Kühlkanal 5b ausgebildet. Vor allem der mittlere Bereich im Inneren des Batterietrogs 2 neigt zu einem Wärmestau beim Betrieb der Traktionsbatterie 1. Daher ist es besonders vorteilhaft, diesen Bereich zu kühlen. Es versteht sich, dass zusätzlich auch die Kühlkanale 5a, 5c mit der Luftkühlung versehen sein können.

Erfindungsgemäß ist der Kühlkanal 5 an der Oberseite der Batteriezellen 3 von einer Abdeckung 20 abgedeckt, an der der Luftstromeinlass 12 und der Luftstromauslass 15 ausgebildet sind. Der Luftstromeinlass 12 und der Luftstromauslass 15 sind bevorzugt von Kühlschläuchen gebildet. Der Auslass 13 des Lüfters 10 ist bevorzugt ebenfalls von einem Kühlschlauch gebildet.

In dem Kühlkanal 5 ist eine Luftstromführungseinrichtung 25 ausgebildet ist, die den vom Lüfter erzeugten Luftstrom 11 in dem Kühlkanal 5 von dem Luftstromeinlass 12 zu dem Luftstromauslass 15 leitet. Erfindungsgemäß erzeugt die Luftstromführungseinrichtung 25 einen mäanderförmigen Luftstrom innerhalb des Kühlkanals 5 von dem Luftstromeinlass 12 zu dem Luftstromauslass 15.

Mit der erfindungsgemäßen Luftkühlung und Belüftung der Kühlkanäle 5 werden die Batteriezellen 5 seitlich gekühlt. Mit dem Lüfter 10 wird hierbei der Bauraum zwischen den Batteriezellen 3 belüftet.

Der im Flurförderzeug angeordnete Lüfter 10 ist mit der von dem Auslass 13 und dem Luftstromeinlass 12 gebildeten Luftführung mit der im Batteriefach angeordneten Traktionsbatterie 1 verbunden. Der Auslass 13 ist an dem Lüfter 10 angeordnet und der Luftstromeinlass 12 an der Traktionsbatterie 1. Sofern der Auslass 13 und der Luftstromeinlass 12 jeweils von einem Kühlschlauch gebildet sind, ist somit derjenige Teil der von Kühlschläuchen gebildeten Luftführung auf der Traktionsbatterie 1 montiert, der die Luftführung mit dem Kühlkanal 5 verbindet, und derjenige Teil der von Kühlschläuchen gebildeten Luftführung an dem Flurförderzeug montiert, der den fahrzeugseitigen Lüfter 10 mit der Traktionsbatterie 1 verbindet. Um beim Wechsel der Traktionsbatterie 1 ein einfaches Trennen und Verbinden der Trennstelle 14 zu ermöglichen, können der Auslass 13 und der Luftstromeinlass 12 als aufeinandersteckbare Kühlschläuche ausgebildet sein.

Die erfindungsgemäße Luftkühlung ermöglicht es hierbei bei geringem Bauaufwand, mit einem Luftstrom 11 die in der Mitte des Batterietrogs 2, zwischen den Wänden 2c, 2d des Batterietrogs 2 angeordneten Batteriezellen 3 zu kühlen und aus diesen Batteriezellen 3 Wärme abzuführen.

Für die drei Kühlkanäle 5a-5c kann jeweils eine entsprechende Luftkühlung vorgesehen sein, wobei bevorzugt ein einzelner Lüfter 10 im Flurförderzeug den Luftstrom 11 erzeugt, der den Kühlkanälen 5a-5c in einer Reihenschaltung oder in einer Parallelschaltung zugeführt wird.

Mit der erfindungsgemäßen Luftkühlung kann bei großen als Blei-Säure-Batterien oder Blei-Gel-Batterien ausgebildeten Traktionsbatterien 1 die Einsatzzeit der Traktionsbatterie 1 erhöht werden, da die Traktionsbatterie 1 bereits beim Einsatz im Flurförderzeug gekühlt werden kann. Durch die erfindungsgemäße Luftkühlung der Traktionsbatterie 1 können die Abkühlphasen verkürzt werden, so dass die Anzahl von Wechselbatterien für den Betrieb des Flurförderzeugs reduziert werden kann.

## Patentansprüche

1. Flurförderzeug mit einer Traktionsbatterie (1), wobei die Traktionsbatterie (1) mehrere in einem Batterietrog (2) angeordnete Batteriezellen (3) aufweist und in einem Batteriefach des Flurförderzeugs angeordnet ist, wobei zwischen den Batteriezellen (3) mindestens ein Kühlkanal (5; 5a; 5b; 5c) in dem Batterietrog (2) angeordnet ist und das Flurförderzeug mit einem Lüfter (10) versehen ist, mit dem ein den Kühlkanal (5; 5a; 5b; 5c) durchströmender Luftstrom (11) erzeugbar ist, wobei an dem Kühlkanal (5; 5a; 5b; 5c) ein Luftstromeinlass (12), der mit dem Auslass (13) des Lüfters (10) verbindbar ist, und ein Luftstromauslass (15) ausgebildet ist, wobei der Kühlkanal (5; 5a; 5b; 5c) mit einer Luftstromführungseinrichtung (25) versehen ist, die den vom Lüfter (10) erzeugten Luftstrom (11) in dem Kühlkanal (5; 5a; 5b; 5c) von dem Luftstromeinlass (12) zu dem Luftstromauslass (15) leitet, **dadurch gekennzeichnet, dass** der Kühlkanal (5; 5a; 5b; 5c) an der Oberseite der Batteriezellen (3) von einer Abdeckung (20) abgedeckt ist, an der der Luftstromeinlass (12) und der Luftstromauslass (15) ausgebildet sind, und dass die Luftstromführungseinrichtung (25) einen mäanderförmigen Luftstrom innerhalb des Kühlkanals (5; 5a; 5b; 5c) von dem Luftstromeinlass (12) zu dem Luftstromauslass (15) erzeugt.

2. Flurförderzeug nach Anspruch 1, **dadurch gekennzeichnet, dass** der Luftstromeinlass (12) und der Luftstromauslass (15) von Kühlschläuchen gebildet ist.

3. Flurförderzeug nach Anspruch 1 oder 2, **dadurch gekennzeichnet, dass** der Auslass (13) des Lüfters (10) von einem Kühlschlauch gebildet ist.

4. Flurförderzeug nach einem der Ansprüche 1 bis 3, **dadurch gekennzeichnet, dass** der Luftstromauslass (15) des Kühlkanals (5; 5a; 5b; 5c) mit einem Auslass am Flurförderzeug verbindbar ist.

5. Flurförderzeug nach einem der Ansprüche 1 bis 4, **dadurch gekennzeichnet, dass** der Lüfter (10) temperaturabhängig durch einen im Flurförderzeug angeordneten Temperatursensor gesteuert ist.

6. Flurförderzeug nach einem der Ansprüche 1 bis 5, **dadurch gekennzeichnet, dass** der Lüfter (10) in Abhängigkeit von der Leistung des Flurförderzeugs eingeschaltet und ausgeschaltet wird.

7. Flurförderzeug nach einem der Ansprüche 1 bis 6, **dadurch gekennzeichnet, dass** der Lüfter (10) Bestandteil der elektrischen Anlage des Flurförderzeugs ist und von einer elektronischen Fahrzeugsteuerung des Flurförderzeugs angesteuert ist.

8. Flurförderzeug nach einem der Ansprüche 1 bis 7, **dadurch gekennzeichnet, dass** die Traktionsbatterie (1) mit einem Zusatzlüfter versehen ist, mit dem ein den Kühlkanal (5; 5a; 5b; 5c) durchströmender Luftstrom (11) erzeugbar ist.

9. Flurförderzeug nach Anspruch 8, **dadurch gekennzeichnet, dass** der Zusatzlüfter in dem Kühlkanal (5; 5a; 5b; 5c) angeordnet ist.

10. Flurförderzeug nach einem der Ansprüche 1 bis 9, **dadurch gekennzeichnet, dass** die Traktionsbatterie (1) als Blei-Säure-Batterie oder als Blei-Gel-Batterie ausgebildet ist.

## Claims

1. Industrial truck having a traction battery (1), wherein the traction battery (1) has a plurality of battery cells (3) arranged in a battery tray (2) and is arranged in a battery compartment of the industrial truck, wherein at least one cooling channel (5; 5a; 5b; 5c) is arranged between the battery cells (3) in the battery tray (2) and the industrial truck is provided with a fan (10) which can be used to produce an airflow (11) flowing through the cooling channel (5; 5a; 5b; 5c), wherein an airflow inlet (12), which can be connected to the outlet (13) of the fan (10), and an airflow outlet (15) are formed on the cooling channel (5; 5a; 5b; 5c), wherein the cooling channel (5; 5a; 5b; 5c) is provided with an airflow guiding device (25) which guides the airflow (11) produced by the fan (10) from the airflow inlet (12) to the airflow outlet (15) in the cooling channel (5; 5a; 5b; 5c), **characterized in that** the cooling channel (5; 5a; 5b; 5c) is covered, on the top side of the battery cells (3), by a cover (20) on which the airflow inlet (12) and the airflow outlet (15) are formed, and **in that** the airflow guiding device (25) produces a meandering airflow inside the cooling channel (5; 5a; 5b; 5c) from the airflow inlet (12) to the airflow outlet (15).

2. Industrial truck according to Claim 1, **characterized in that** the airflow inlet (12) and the airflow outlet (15) are formed by cooling hoses.

3. Industrial truck according to Claim 1 or 2, **characterized in that** the outlet (13) of the fan (10) is formed by a cooling hose.

4. Industrial truck according to one of Claims 1 to 3, **characterized in that** the airflow outlet (15) of the cooling channel (5; 5a; 5b; 5c) can be connected to an outlet on the industrial truck.

5. Industrial truck according to one of Claims 1 to 4, **characterized in that** the fan (10) is controlled in a temperature-dependent manner by a temperature sensor arranged in the industrial truck.

6. Industrial truck according to one of Claims 1 to 5, **characterized in that** the fan (10) is switched on and off depending on the power of the industrial truck.

7. Industrial truck according to one of Claims 1 to 6, **characterized in that** the fan (10) is part of the electrical system of the industrial truck and is controlled by an electronic vehicle controller of the industrial truck.

8. Industrial truck according to one of Claims 1 to 7, **characterized in that** the traction battery (1) is provided with an additional fan which can be used to produce an airflow (11) flowing through the cooling channel (5; 5a; 5b; 5c).

9. Industrial truck according to Claim 8, **characterized in that** the additional fan is arranged in the cooling channel (5; 5a; 5b; 5c).

10. Industrial truck according to one of Claims 1 to 9, **characterized in that** the traction battery (1) is configured as a lead acid battery or a lead gel battery.

## Revendications

1. Convoyeur au sol comprenant une batterie de traction (1), la batterie de traction (1) comportant une pluralité d'éléments de batterie (3) disposés dans un bac de batterie (2) et étant disposée dans un compartiment de batterie du convoyeur au sol, au moins un conduit de refroidissement (5 ; 5a ; 5b ; 5c) étant ménagé dans le bac de batterie (2) entre les éléments de batterie (3) et le convoyeur au sol étant pourvu d'un ventilateur (10) permettant de générer un écoulement d'air (11) à travers le conduit de refroidissement (5 ; 5a ; 5b ; 5c), une entrée d'écoulement d'air (12) qui peut être reliée à la sortie (13) du ventilateur (10) et une sortie d'écoulement d'air (15) étant formées au niveau du conduit de refroidissement (5 ; 5a ; 5b ; 5c), le conduit de refroidissement (5 ; 5a ; 5b ; 5c) étant pourvu d'un dispositif de guidage d'écoulement d'air (25) qui dirige l'écoulement d'air (11), généré par le ventilateur (10), dans le conduit de refroidissement (5 ; 5a ; 5b ; 5c), de l'entrée d'écoulement d'air (12) à la sortie d'écoulement d'air (15), **caractérisé en ce que** le conduit de refroidissement (5 ; 5a ; 5b ; 5c) est recouvert du côté supérieur des éléments de batterie (3) par un couvercle (20) au niveau duquel l'entrée d'écoulement d'air (12) et la sortie d'écoulement d'air (15) sont formées, et **en ce que** le dispositif de guidage d'écoulement d'air (25) génère un écoulement d'air sinueux à l'intérieur du conduit de refroidissement (5 ; 5a ; 5b ; 5c) de l'entrée d'écoulement d'air (12) à la sortie d'écoulement d'air (15) .

2. Convoyeur au sol selon la revendication 1, **caractérisé en ce que** l'entrée d'écoulement d'air (12) et la sortie d'écoulement d'air (15) sont formées par des tuyaux de refroidissement.

3. Convoyeur au sol selon la revendication 1 ou 2, **caractérisé en ce que** la sortie (13) du ventilateur (10) est formée par un tuyau de refroidissement.

4. Convoyeur au sol selon l'une des revendications 1 à 3, **caractérisé en ce que** la sortie d'écoulement d'air (15) du conduit de refroidissement (5 ; 5a ; 5b ; 5c) peut être reliée à une sortie au niveau du convoyeur au sol.

5. Convoyeur au sol selon l'une des revendications 1 à 4, **caractérisé en ce que** le ventilateur (10) est commandé en fonction de la température par un capteur de température disposé dans le convoyeur au sol.

6. Convoyeur au sol selon l'une des revendications 1 à 5, **caractérisé en ce que** le ventilateur (10) est activé et désactivé en fonction de la puissance du convoyeur au sol.

7. Convoyeur au sol selon l'une des revendications 1 à 6, **caractérisé en ce que** le ventilateur (10) fait partie du système électrique du convoyeur au sol et est commandé par une commande électronique du convoyeur au sol.

8. Convoyeur au sol selon l'une des revendications 1 à 7, **caractérisé en ce que** la batterie de traction (1) est munie d'un ventilateur supplémentaire permettant de générer un écoulement d'air (11) à travers le conduit de refroidissement (5 ; 5a ; 5b ; 5c).

9. Convoyeur au sol selon la revendication 8, **caractérisé en ce que** le ventilateur supplémentaire est disposé dans le conduit de refroidissement (5 ; 5a ; 5b ; 5c).

10. Convoyeur au sol selon l'une des revendications 1 à 9, **caractérisé en ce que** la batterie de traction (1) est réalisée sous la forme d'une batterie au plomb-acide ou d'une batterie au plomb-gel.
